(19) Europäisches Patentamt
European Patent Office
Office européen des brevets

(11) **EP 2 246 231 B1**

(12) **EUROPEAN PATENT SPECIFICATION**

(45) Date of publication and mention
of the grant of the patent:
**26.10.2011 Bulletin 2011/43**

(51) Int Cl.:
***B60W 30/06*** (2006.01)   ***B62D 15/02*** (2006.01)

(21) Application number: **09425168.3**

(22) Date of filing: **30.04.2009**

(54) **Parking assistant system**

System zur Einparkhilfe

Système d'assistance au parking

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**03.11.2010 Bulletin 2010/44**

(73) Proprietor: **Magneti Marelli S.p.A.**
**20011 Corbetta (MI) (IT)**

(72) Inventors:
• **Ghisio, Guido**
**10078 Venaria Reale (Torino) (IT)**
• **Monchiero, Gianluca**
**10078 Venaria Reale (Torino) (IT)**
• **Bollea, Denis**
**10078 Venaria Reale (Torino) (IT)**
• **Calvi, Giorgio**
**10078 Venaria Reale (Torino) (IT)**

(74) Representative: **Notaro, Giancarlo**
**Buzzi, Notaro & Antonielli d'Oulx**
**Via Maria Vittoria 18**
**10123 Torino (IT)**

(56) References cited:
**EP-A- 1 253 065**     **EP-A- 1 839 948**
**WO-A-2007/012516**     **GB-A- 2 357 743**
**GB-A- 2 359 796**     **JP-A- 2001 010 431**
**US-A1- 2008 094 252**

**Description**

Text of the description

The subject of the present invention is a parking assistant system for assisting the driver in a reverse manoeuvre to park the vehicle at the roadside parallel to the direction of the road in a parking space between a first obstacle and a second obstacle, which define, respectively, the front limit and the rear limit of said space with respect to the body of the vehicle. In particular, the invention regards a system of the type comprising:

means for detection of the rear scene;
means for display of the image of the detected scene; and
control means designed to superimpose on said image at least one line of assistance for the manoeuvre, which is mobile with the vehicle with respect to the image displayed. An example of such a system is described in US2008/094252 A1, which is considered as the closest prior art according to the preamble of claim 1.

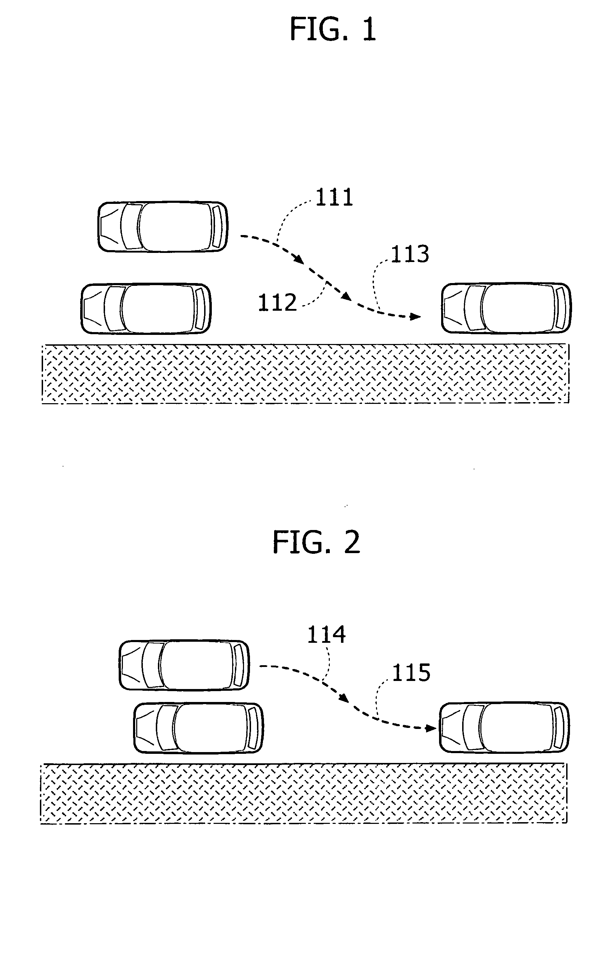

The European patent application No. EP1493632A1 describes a parking assistant system of the type indicated above. In the system described in said application a line of assistance is provided, which enables the driver to identify a set of positions starting from which the parking manoeuvre can be correctly made according to a pre-set mode, without coming into collision with the obstacles that delimit the parking space. Said so-called correct positions, which are defined by the line of assistance, are at a relatively long distance from the internal longitudinal edge of the parking space so that the driver is obliged to perform the parking manoeuvre in three distinct steps, schematically represented by the dashed lines 111, 112 and 113 of Figure 1. The first step 111 envisages backing up with a first steering angle, the second step 112 envisages backing up with a zero steering angle, and the third and last step 113 envisages backing up with a second steering angle, of opposite sign with respect to the first. A type of manoeuvre of said sort is somewhat laborious and complex so that this system in the eyes of the user proves to be far from intuitive. In addition, since said system leaves the choice of one out of all the so-called correct positions defined by the line of assistance to the driver's discretion, the driver is more induced to error in so far as, according to the start-of-manoeuvre position, he will have to carry out said manoeuvre in a different way in order to be able to bring the vehicle into the same final position. In particular, he will be forced to follow a rectilinear stretch in reverse, corresponding to the stretch 112 of Figure 1, which is more or less long, according to the starting distance of the vehicle from the internal edge of the parking slot. A similar system is disclosed in EP 1839948.

The subject of the present invention is a parking assistant system that will overcome the drawbacks described above, and that in particular will be simple and intuitive.

In particular, the subject of the present invention is a parking assistant system according to claim 1.

The system to which the invention refers obviously enables the driver to be assisted in the parking manoeuvre also in the case where one or both of the obstacles are absent. Of course, consequently, where in the present description and in the ensuing claims reference is made to the function of assistance in the parking manoeuvre between two obstacles, said indication is not intended in a limiting sense, it remaining understood that the system can be used even in the absence of one or both of the obstacles.

The first line of assistance identifies, in a pre-set position of the image displayed, an ideal parking area of predetermined longitudinal and transverse dimensions, such that the body of the vehicle during the aforesaid manoeuvre intersects said ideal parking area only on its outer longitudinal side so that the driver is able to detect that he has reached said correct longitudinal and transverse start-of-manoeuvre position, when said first and second obstacles, as displayed, are set in a longitudinal direction outside the parking area and comprised in the transverse dimension of the parking area.

The aforesaid line of assistance comprises a first line shaped like an L set upside down so as to define a limit to the external distal corner portion of the first obstacle, and a second line shaped like an L set upside down, which defines the internal distal corner of said ideal parking area, said second line shaped like an L set upside down together with the horizontal stretch of said first line defining said ideal parking area.

As may be inferred from the foregoing, the system of assistance according to the present invention envisages a reference whereby the driver is able to identify immediately the correct position from which to start the parking manoeuvre. Said position is defined in a longitudinal and transverse direction so that the driver will no longer be put in the condition of having to choose from among a plurality of positions, and above all he may follow the manoeuvre always in the same way, with the certainty that upon completion of the manoeuvre the vehicle will be always at the same distance from the internal longitudinal edge of the parking space.

As also emerges above, the parking assistant system according to the present invention moreover enables the driver to follow in an assisted way a parking manoeuvre in just two steps (as schematically illustrated with the lines 114 and 115 in Figure 2); said simplicity of execution enables the driver to get acquainted right from the start with the use of the system.

Further characteristics and advantages of the invention will become evident from the annexed drawings, which are provided purely by way of nonlimiting example and in which:

- Figure 1a represents the parking manoeuvre that is made with the assistance of the system according to the European patent application No. EP1493632A1;
- Figure 2 represents the parking manoeuvre that is made with the assistance of the system according to the present invention;
- Figure 3 represents a diagram of the system according to the present invention;
- Figure 4 represents the visual indications supplied by the system according to the present invention in a first position of the vehicle;
- Figures 5A and 5B represent visual information supplied by the system in a second position of the vehicle;
- Figure 6 represents the second position of Figure 5A;
- Figure 7 represents the visual information in a third position of the vehicle;
- Figure 8 represents the visual information supplied by the system in a fourth position of the vehicle;
- Figure 9 represents the fourth position of Figure 8;
- Figure 10 represents the visual information supplied by the system in a fifth position of the vehicle;
- Figure 11 represents the visual information supplied by the system in a sixth position of the vehicle;
- Figure 12 represents the sixth position of Figure 11;
- Figure 13 represents a geometrical scheme for processing the lines of assistance of the system according to the present invention; and
- Figures 14 and 15 represent details of the scheme of Figure 13.

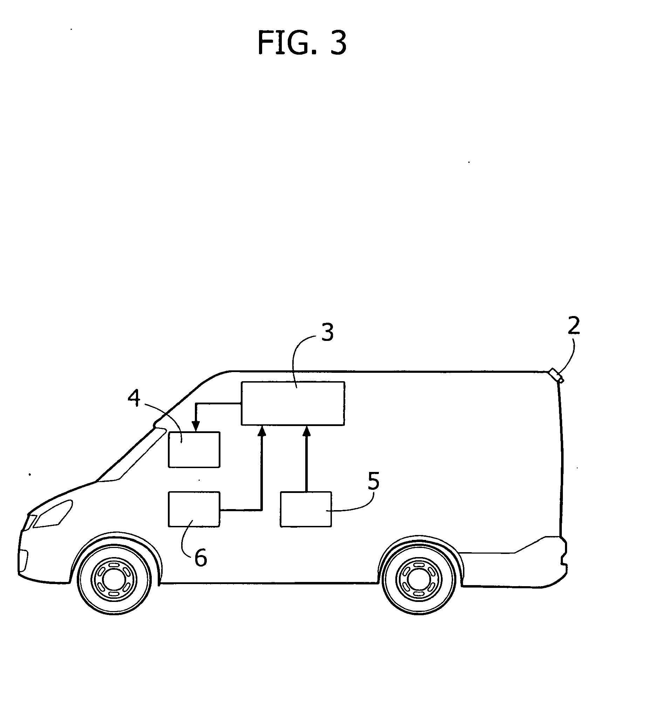

Figure 3 represents an example of block diagram of the parking assistant system according to the present invention. Said system comprises a video camera 2 for filming the scene to the rear of the vehicle. A control unit 3 is configured for displaying the image filmed by the video camera on a display 4, installed inside the vehicle within the field of vision of the driver. The control unit 3 is likewise configured for superimposing on the scene appearing on the display 4, lines of assistance that it has stored or calculated in real time, whenever it detects the condition of engagement of the reverse via a sensor 5. The system further comprises a sensor 6 designed to detect the steering angle of the vehicle; on the basis of said information, as will be seen in what follows, the control unit manages the lines of assistance.

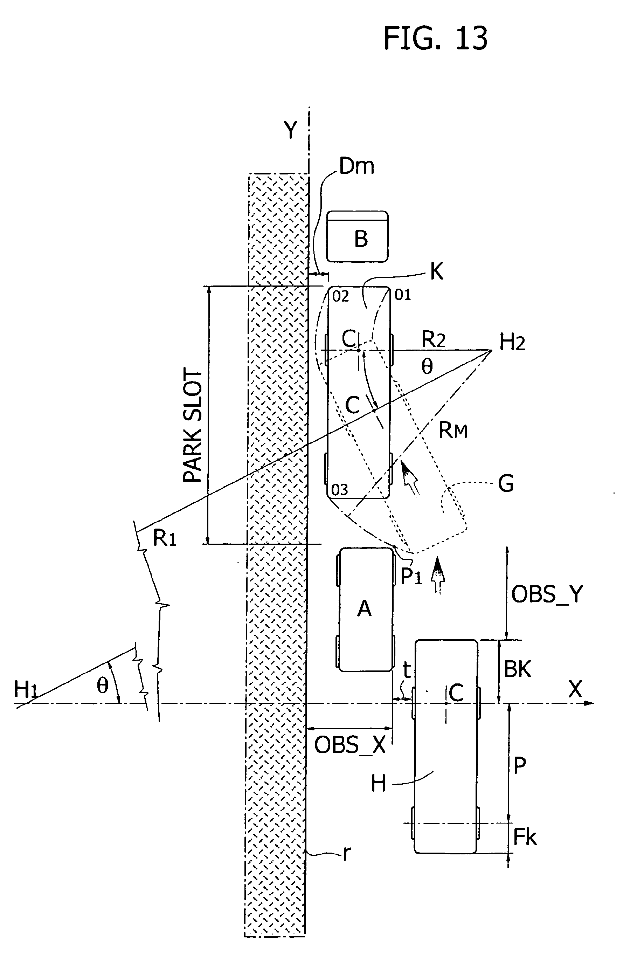

As mentioned previously, the lines of assistance of the system according to the present invention identify the ideal parking area, thanks to which the driver has a reference on the correct position, in a longitudinal and transverse direction, to be assumed in order to start the manoeuvre, and at the same time verifies that the free space is sufficiently large to park the vehicle. Figures 13 to 15 represent a geometrical scheme useful for identifying the dimensions of said ideal area and the pre-defined position of this on the display 4.

Figure 13 represents, in a cartesian system X,Y, the body of the vehicle set in a position K corresponding to the end-of-parking position, in which the body of the vehicle is located at a pre-set distance Dm from the longitudinal edge r of the parking space. The distance Dm basically represents the distance from the edge r where the vehicle body is to be positioned, in the end-of-manoeuvre position K.

In said system, likewise represented is the body of the vehicle in a pre-set start-of-manoeuvre position H, at a distance Obs_x + t from the longitudinal edge r and with its rear axle superimposed on the axis X.

An obstacle A is set with its external distal corner in the point of co-ordinates Obs_x and Obs_y + Bk. The transverse distance between the vehicle body and the obstacle A is equal to the pre-set distance t.

The parking manoeuvre pre-established so that the vehicle body will move from position H to position K comprises a first manoeuvre in which, as illustrated in Figure 2, the vehicle backs up from position H, with a first steering angle, until it reaches an intermediate position G, and a second manoeuvre in which the vehicle backs up starting from position G with a second steering angle of opposite sign with respect to the first, until it reaches the aforesaid position K.

The unknown parameter that is to be found is the longitudinal dimension "park slot", indicated in Figure 13, necessary in order for the body of the vehicle, starting from position H, to be able to follow the parking manoeuvre described above without coming into collision with the obstacle A.

The steering angle of the second manoeuvre is pre-set at the maximum value that can be performed by the vehicle in order to limit the space necessary for parking as much as possible. Once the steering angle is known, it is possible to obtain the radius of curvature of the path that the point C of the vehicle, corresponding to the central point of the rear axle, will follow with said steering angle, via Eq. 1 given below.

$$R\_curvatura = P\frac{\cot\delta_i + \cot\delta_e}{2} \quad (Eq.\ 1)$$

where $\delta_i$ and $\delta_e$ are the angles of the inner wheel and the outer wheel with respect to the curvature, and P is the wheel base of the vehicle. The steering-angle/wheel-angle relation is given by the manufacturer of the motor vehicle.

Figure 13 represents the radius R2 obtained from Eq. 1. In a region corresponding to position K the circular path defined by the point C of the body of the vehicle terminates substantially tangential to an axis parallel to the axis y so that the radius R2 must necessarily extend orthogonal to the axis Y, starting from the point C of the body of the vehicle in position K. Once the radius R2 has been defined, also the centre of curvature H2 is identified. At this point, once H2 has been identified, it is possible to trace the circular paths centred in H2 followed by the corners O1, 02 and 03 of the body of the vehicle during the second manoeuvre.

The radius R2 being known, it is also possible to know the minimum distance from the wall up to which the corner 02 of the body of the vehicle is brought during the second manoeuvre, which is given by

$$Dist\_\min = D_m - \left[ \frac{\left(R_2 + \frac{C}{2}\right)}{\cos\left(tg^{-1}\left(\frac{B_k}{R_2 + \frac{C}{2}}\right)\right)} - R_2 \right] \quad (Eq.\ 13)$$

where C is the width of the vehicle body and Bk is the distance between the rear axle and the back of the vehicle.

In the case of a negative value of the minimum distance calculated, to which there corresponds a situation of interference between the corner 02 and the longitudinal edge r of the parking space, it will be necessary to fix another value of distance Dm.

Instead, in order for the second manoeuvre to occur without the vehicle body colliding against the obstacle A, the condition is imposed where the circular path, followed by the corner 03 of the body of the vehicle during the second manoeuvre, passes through the point P1 of co-ordinates

$$P_1 = \left(P_{1,x}, P_{1,y}\right) = \left(Obs\_x, Obs\_y + B_K + \varepsilon_y\right) \quad (Eq.2)$$

where the parameter $\varepsilon_Y$ represents a safety distance that serves also to compensate for the errors.

The equation of the circumference centred in H2 and passing through P1 is as follows:

$$\left(P_{1,x} - H_{2,x}\right)^2 + (P_{1,y} - H_{2,y})^2 = R_M^2 \quad (Eq.3)$$

Said circumference has a radius RM, illustrated in Figure 13.

The co-ordinates of the point H2 are obtained from the following relation:

$$H_2 = \left(H_{2,x}, H_{2,y}\right) = \left((D_m + \frac{C}{2} + R_2), ((R_1 + R_2) \cdot \sin \vartheta)\right) \text{ (Eq.4)}$$

where R1 is represented in Figure 13 and is an unknown of the system.

The radius RM, equal to the distance between H2 and P1, is defined by the following relation:

$$R_M = \sqrt{(P + F_k)^2 + \left(R_2 + \frac{C}{2}\right)^2} \text{ (Eq.5)}$$

,

where $F_k$ is the distance between the front axle and the front of the vehicle.

In order to pass from the start-of-manoeuvre position H to the intermediate position G, the body of the vehicle must perform the first manoeuvre with a steering angle of opposite sign with respect to the steering angle used for the second manoeuvre. However, in order for the motor vehicle to be, at the end of the second manoeuvre, parallel to the wall, as shown in Figure 13, the angle θ that is defined by the path of point C in the second manoeuvre must be equal to the angle θ subtended by the path of point C in the first manoeuvre.

Once a value of the angle θ has been fixed, it is possible to identify the intermediate position G of the vehicle body and consequently construct geometrically the radius of curvature R1 of the first manoeuvre. In fact, it extends in a first direction with inclination equal to the angle θ, starting from point C of the vehicle body in position G, and in a second direction that is superimposed on the axis X, starting from point C of the vehicle body in position K. By intersecting said two directions it is possible to identify the radius R1, as likewise the centre of curvature H1 of the path of the first manoeuvre. The radius of curvature R1 and the angle θ are the unknowns of the system. R1 and θ can be obtained from the following equations:

$$\sin \vartheta = \frac{K}{R_1 + R_2} \text{ (Eq.6)}$$

$$K = \left(Obs\_y + B_k + \varepsilon_y\right) \mp \sqrt{R_M^2 - \left(Obs\_x - \left(D_m + \frac{C}{2} + R_2\right)\right)^2} \text{ (Eq.7)}$$

$$\cos \vartheta = 1 - \frac{\left(Obs\_x + t - D_m\right)}{R_1 + R_2} \text{ (Eq.8)}$$

$$\sin^2 \vartheta + \cos^2 \vartheta = 1 \text{ (Eq.9)}$$

$$\begin{cases} R_1 = \dfrac{K^2 + \left(Obs\_x + t - D_m\right)^2}{2 \cdot \left(Obs\_x + t - D_m\right)} - R_2 \\[4mm] \vartheta = \sin^{-1}\left(\dfrac{K}{R_1 + R_2}\right) \end{cases} \qquad (Eq.10)$$

At this point it is possible to obtain the minimum parking space necessary for the manoeuvre, corresponding to the longitudinal dimension of the ideal parking area. This dimension can be obtained via the following equation:

$$Park\_Slot_{min} = \left(R_1 + R_2\right) \cdot \sin \vartheta - Obs\_y \quad (Eq.12)$$

The dimension Park_Slot$_{min}$ obtained must be such that the body of the vehicle during the first manoeuvre will not collide with the obstacle A.

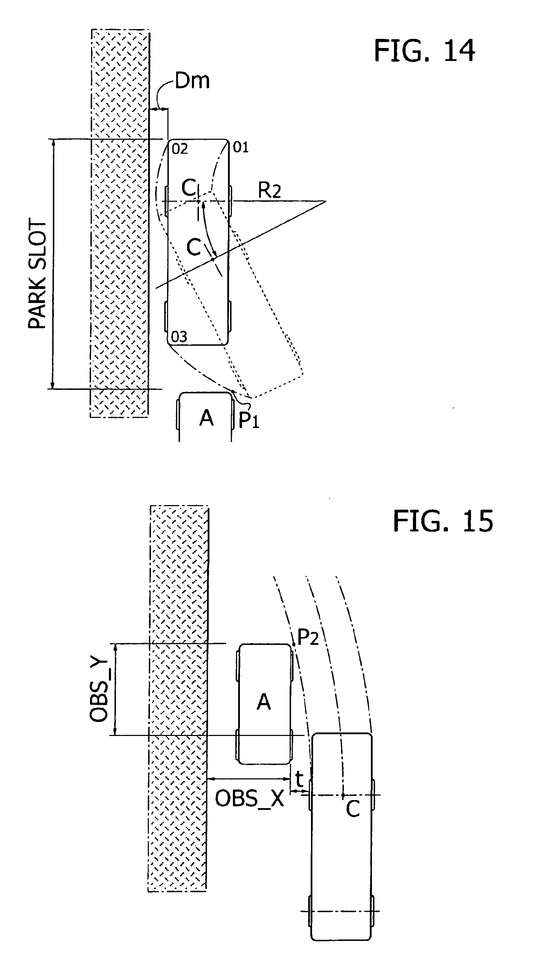

To verify that said condition is respected, it is necessary to calculate a minimum radius of curvature and verify that the radius R1 is greater than said minimum radius of curvature. Said minimum radius of curvature is calculated as radius of the circular path that the body of the vehicle traverses during the first manoeuvre, starting from the position H, passing through the point P2 of co-ordinates (Obs_x + $\varepsilon_x$; Obs_y + Bk), as illustrated in Figure 15. The equation of the minimum radius is given below.

$$R_{1,min} = \frac{\left(\dfrac{C}{2}\right)^2 - \left(\varepsilon_x - t - \dfrac{C}{2}\right)^2 - \left(B_k + Obs\_y + \varepsilon_y\right)^2}{2 \cdot \left(\dfrac{C}{2} + \varepsilon_x - t - \dfrac{C}{2}\right)}$$

If the radius of curvature R1 is smaller than the minimum radius of curvature, it means that the dimension "park slot" of the ideal area that has been obtained is not sufficiently large for the body of the vehicle to move from position H to position K without colliding with the obstacle A. In this case, it will be necessary to modify one or more of the pre-set parameters Obs_x, t, Obs_y and reiterate the procedure described above until a radius R1 greater than the minimum radius calculated as indicated above is identified.

Once the correct parameter R1 has been identified, it is possible to obtain from Eq. 1 above, the steering angle for the first manoeuvre.

The dimension "park slot" and the dimension Obs_x define the ideal parking area in a longitudinal and transverse direction. Since, as has been seen above, to obtain the "park slot" dimension there passage of the vehicle body through point P1 has been imposed, said point being located on the outer longitudinal side of the ideal area, at a distance $\varepsilon y$ from the vertex of the latter of co-ordinates Obs_x, Obs_y + Bk, the dimensions of the ideal area are such that the body of the vehicle, executing the manoeuvre in the way that has been determined above, intersects the ideal parking area only on its outer longitudinal side.

The relative position of the rear edge of the body of the vehicle with respect to said ideal area is determined by the pre-set values t and Obs_y, which correspond, respectively, to the transverse distance and to the longitudinal distance between said rear edge and the distal outer corner of the obstacle A.

In practice, hence, via the procedure indicated above the ideal area necessary for the parking manoeuvre and the correct position that the back of the vehicle must assume with respect to it for starting said manoeuvre are identified.

On the display 4, said ideal area is identified by the lines of assistance, in a position that, with respect to the rear of the body of the vehicle, as displayed by the video camera, is defined so as to correspond to the aforesaid correct position.

The ideal parking area thus defined on the display has the function of providing the driver with an indication both on the correct start-of-manoeuvre position and on the free space that is necessary in order to be able to park the vehicle.

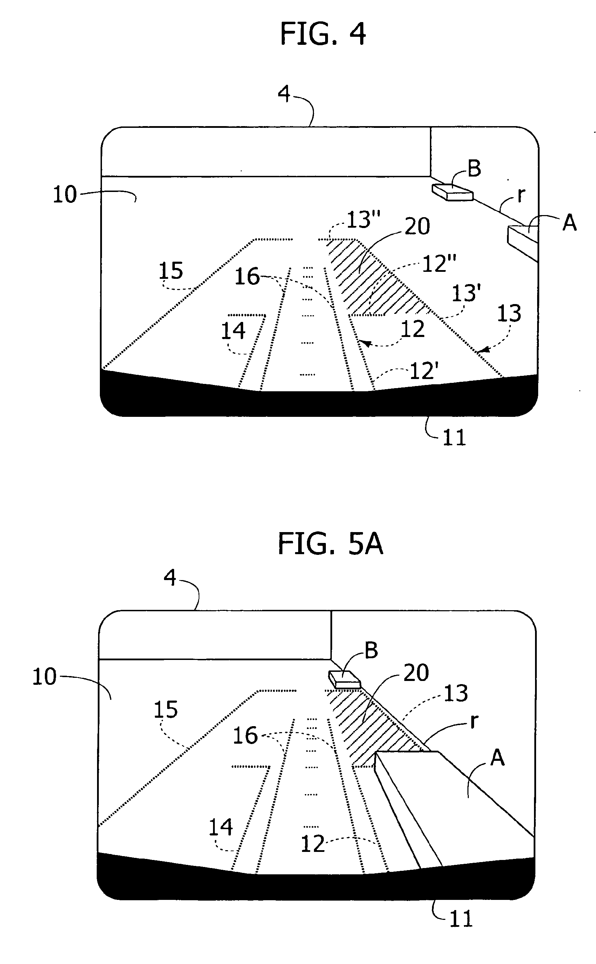

Figures 4-12 illustrate operation of the system in a scenario in which the vehicle is to be parked parallel to the left edge r, with respect to the direction of advance along the road, between two obstacles A and B.

Figures 4 and 5A illustrate an example of construction of the lines of assistance supplied by the system according to the present invention.

With reference to said figures, on the scene 10 that appears on the display 4, the control unit 3 superimposes a black strip 11, at the bottom of the display in such a way as to cover the part of image corresponding to the back of the vehicle and to the area immediately close to it, these being, as a result of the optics of the video camera, displayed with distortions such that might lead to an incorrect perception of the scene by the driver.

Superimposed on the scene 10 are lines 12 and 13 designed to identify, in a pre-defined position with respect to the back of the vehicle, as appearing on the display 4, the ideal parking area 20. In particular, the line 12 has the shape of an L set upside down that defines an outer limit, with respect to the longitudinal edge r of the parking space, within which the obstacle A must be located so that the vehicle will not collide with it during the parking manoeuvre. Also the line 13 has the shape of an L set upside down, but in a way specular with respect to the line 12. The longitudinal stretch 13' of the line 13 supplies a reference for the driver on the transverse start-of-manoeuvre position that the vehicle must assume, with respect to the longitudinal edge of the parking space, so that at the end of the parking manoeuvre it will come to be at the pre-set distance Dm from said edge. Any possible obstacles that define the internal longitudinal edge of the parking space must find themselves beyond said line, outside the ideal area. The transverse stretch 13" of the line 13 defines, together with the horizontal stretch 12" of the line 12, the longitudinal dimension of the ideal parking area. Likewise, on account of what has been said above, the distance between the longitudinal stretches 12' and 13' of the lines 12 and 13 define the transverse dimension of the ideal parking area. Represented in Figures 4 and 5A are also lines 14 and 15, which represent the lines of assistance, equivalent to the lines 12 and 13, for a parallel parking space on the right-hand side of the road.

Shown in Figures 4 and 5A are also lines 16 that represent so-called dynamic lines of assistance, which define the transverse area that the body of the vehicle comes to traverse, in a reverse manoeuvre at the current steering angle, which is detected by the sensor 6 illustrated in Figure 3. As may be inferred from Figures 4 and 5A, the vehicle, in the condition associated to said figures, is at a zero steering angle.

The lines of assistance 12, 13, 14 and 15 described above are mobile with the vehicle with respect to the scene shown on the display and appear as static on the aforesaid display.

As mentioned previously, the control unit 3 can be configured for superimposing on the scene appearing on the display 4 all the lines of assistance described above, whether static or dynamic, whenever it detects the condition of engagement of the reverse via the sensor 5. A preferred embodiment of the invention envisages, however, the display of said lines of assistance also when the vehicle is travelling forwards so that, also when proceeding forwards, the driver will be equally allowed to align the vehicle correctly for the scenario of the subsequent step in reverse.

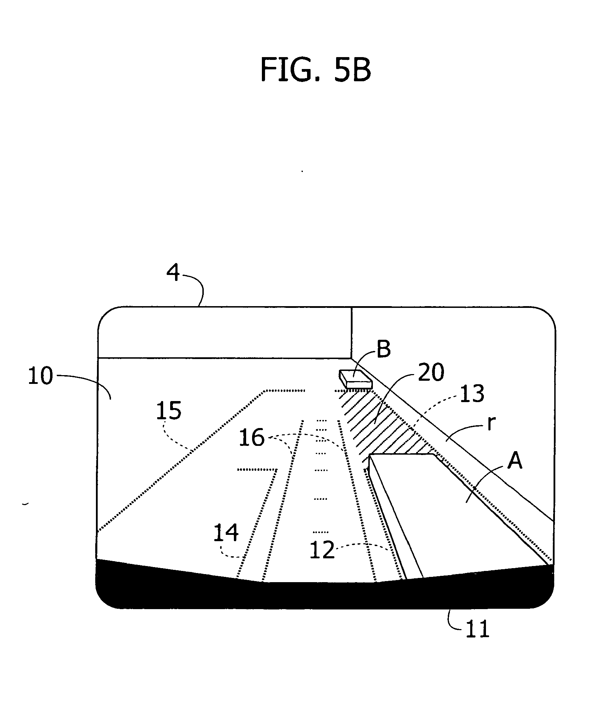

Figure 4 illustrates a rear scene 10 corresponding to a position of the vehicle that is still far from the correct position for starting the parking manoeuvre. For this purpose the driver will have to bring the vehicle into a position such that the lines of assistance 12 and 13, as displayed, set themselves with respect to the obstacles A and B in the way illustrated in Figure 5A. In the specific case, the obstacles A and B must come to be longitudinally outside the space comprised between the horizontal stretches of the lines 12 and 13, and comprised in the transverse dimension of the space between the longitudinal stretches of the lines 12 and 13 themselves. In other words, the ideal parking area 20, identified by the lines 12 and 13 must be set between the obstacles A and B and substantially aligned to the latter. Furthermore, in order to enable completion of the parking manoeuvre, the stretch 13' must be set substantially coincident with the edge r, or alternatively, in the case where the obstacle A is located at a sufficient distance from the edge r, the stretch 12 must be set substantially coinciding with the edge of the obstacle A that is closest to the vehicle, as shown in Figure 5B.

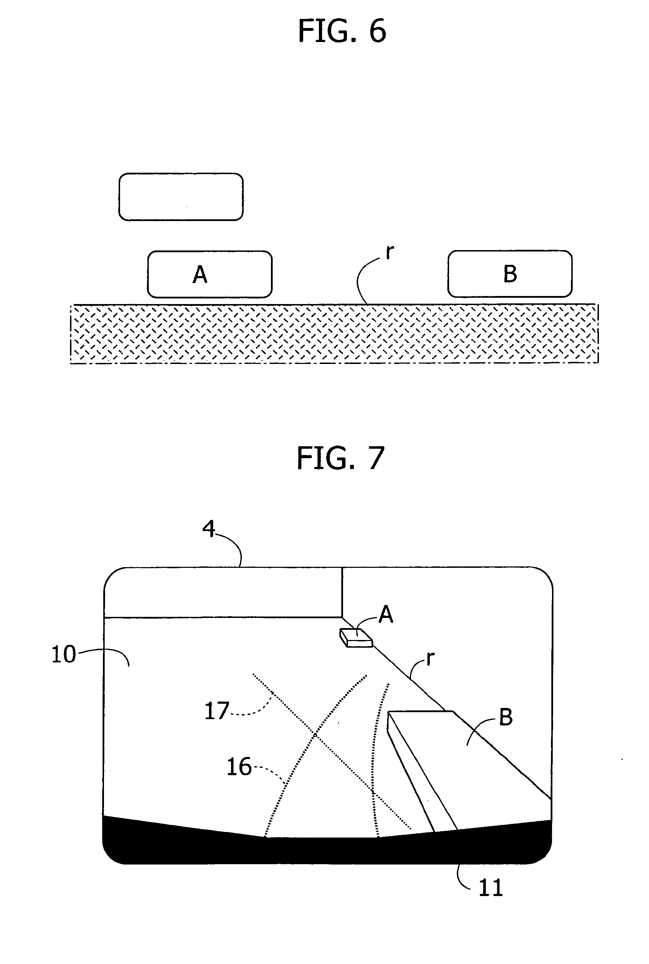

When the condition illustrated in Figures 5A or 5B appears on the display, the driver knows that the vehicle is in the correct position for starting the parking manoeuvre. Figure 6 represents said correct position. The driver can hence vary the steering angle until the oblique line 17 of Figure 7 appears on the display to indicate that the value of the predetermined steering angle for executing the first manoeuvre has been reached (detected by the sensor 6), said steering angle, as mentioned previously, having been derived from the angle of curvature θ represented in Figure 13. Whilst the driver varies the steering angle, the lines 16 vary accordingly in their orientation until the conformation illustrated in Figure 7 is assumed, corresponding to the path that the vehicle will follow in reverse, keeping the steering angle at the aforesaid pre-set value. By controlling said path, the driver can effectively verify that the vehicle does not come into collision with the obstacle A.

Simultaneously with the appearance of the line 17, the lines of assistance 12, 13, 14 and 15 disappear from the display in so far as, according to the logic of the system, the vehicle is by now already set in the correct position for starting the parking manoeuvre and the driver has already been able to verify that the free space between the obstacles A and B is sufficient for parking.

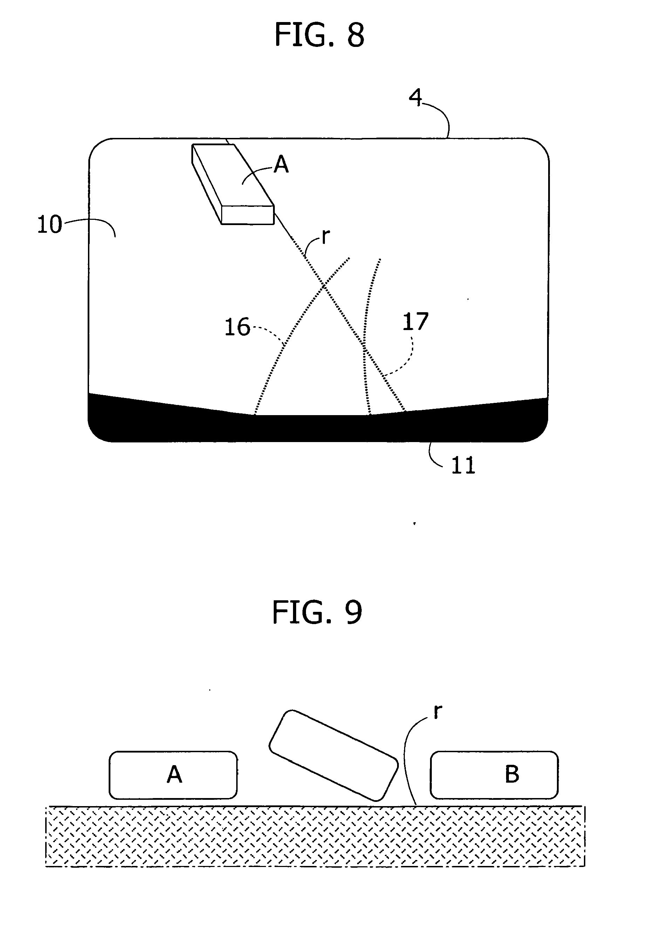

The driver can thus start to back up the vehicle keeping the steering angle constant, at the pre-set value, until the line 17 comes to be superimposed on the longitudinal edge r, as represented in Figure 8. When the condition of Figure 8 appears on the display, the vehicle is in the intermediate position illustrated in Figure 9, where the driver must stop the vehicle and turn the steering wheel until the pre-set value of steering angle for carrying out the second manoeuvre is reached. As already explained previously, said pre-set angle corresponds to the maximum steering angle of the vehicle.

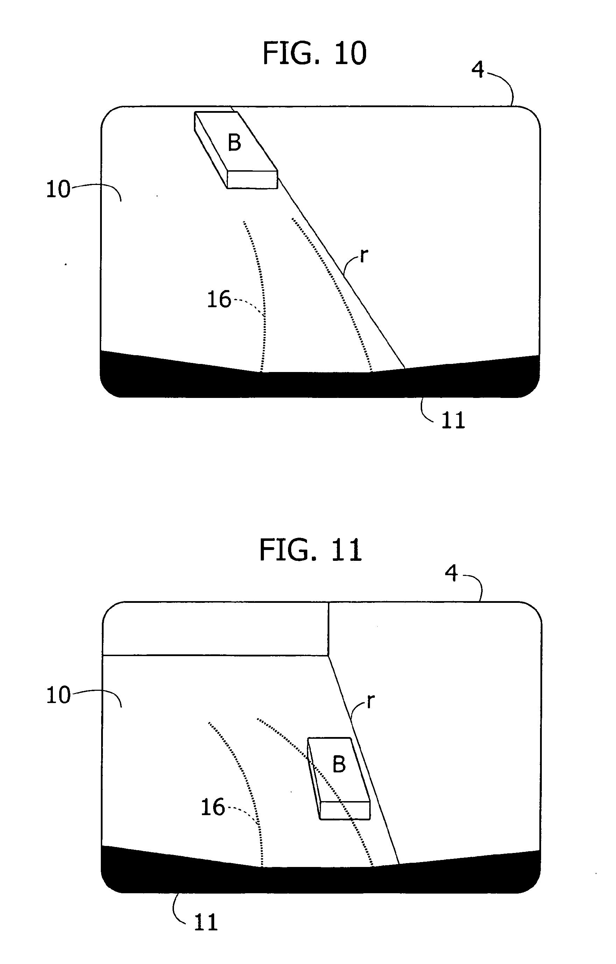

Figure 10 illustrates what appears on the display when, in the position of the vehicle of Figure 9, the driver has turned the steering wheel as far as the pre-set steering angle for the second manoeuvre. As may be seen from said figure, the lines 16 provide a visual confirmation for the driver of the way being free for the second manoeuvre and of the fact that at the end of said manoeuvre the vehicle will be in the parking space, substantially aligned to the longitudinal edge r.

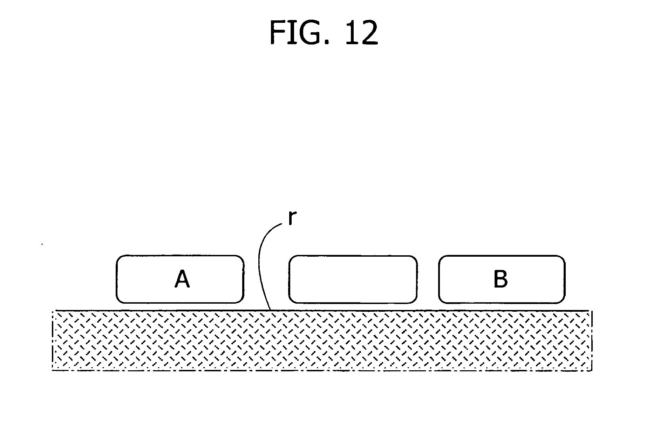

Figure 11 illustrates the scene appearing on the display at the end of the parking manoeuvre, when the vehicle is in the position illustrated in Figure 12, at the pre-set distance Dm from the longitudinal edge r of the parking space.

As mentioned previously, the system can be used also in the absence of one or both of the obstacles A and B. In the case of the presence of just the obstacle B, the driver must set the vehicle in a position so that the obstacle B is beyond the line 13" and the edge r beyond the line 13'. In the case, instead, of the presence of just the obstacle A, the driver must position the vehicle so that the obstacle A is found inside the line 12. Finally, in the case of absence of both of the obstacles A and B, the driver must set the vehicle in a position where the edge r is located beyond the line 13'.

The lines of assistance for identifying the ideal parking area, which in the example of Figures 4 and 5 are represented by the lines 12 and 13, can be traced in any suitable way that will enable the driver to identify said ideal area on the display. For example, it is possible to envisage a rectangle, or else also a set of segments or point-like signs, set at appropriate distances apart from one another. The type of conformation of the lines 12 and 13 is, however, preferable in so far as it provides a clear and precise reference as would a viewfinder, which enables the driver to identify immediately, not only the ideal area, but above all the boundaries within which the obstacles must be located so that said area can be considered in the correct start-of-manoeuvre position.

From the foregoing, it is moreover clear that the lines 16 are not essential for assistance to the driver in the parking manoeuvre. However, the combination of said lines with the references defining the ideal parking area enables the driver to control any possible errors that he may make in using said references.

The utility and functionality of the parking assistant system described above is evident above all in applications on vans, and lorries in general, in which the distance between the back of the vehicle body and the rear axle of the wheels is relatively large.

**Claims**

1. A parking assistant system for assisting the driver in a reverse manoeuvre to park the vehicle at the roadside parallel to the direction of the road in a parking space between a first obstacle and a second obstacle, which define, respectively, the front limit and the rear limit of said space with respect to the body of the vehicle, said system comprising:

   means (2) for detection of the rear scene;
   a display (4) for display of the image of the detected scene;
   control means (3) designed to superimpose on said image at least one line of assistance for the manoeuvre, which is mobile with the vehicle with respect to the image detected and static on the display,
   said system being **characterized in that** it comprises at least one first line of assistance (12, 13) set according to a scheme which provides a reference for the driver on the correct longitudinal and transverse position of the vehicle, with respect to the aforesaid obstacles, for starting the aforesaid reverse-parking manoeuvre so that said parking manoeuvre will be made, without interfering with the aforesaid obstacles, with a first steering step at a first known steering angle and with a second, immediately subsequent, steering step, with a second known steering angle, of opposite sign with respect to the first, said system comprising at least one second line of assistance (17) that provides the driver with a reference on the position of the vehicle in which it is necessary to pass from the first step to the second step for completing the parking manoeuvre with the vehicle set substantially aligned to said first and second obstacles, wherein
   said at least one first line of assistance (12, 13) identifies, in a pre-set position of the image displayed, an ideal parking area (20) of predetermined longitudinal and transverse dimensions, such that the body of the vehicle during the aforesaid manoeuvre intersects said ideal parking area only on its outer longitudinal side so that the driver is able to detect that he has reached said correct longitudinal and transverse start-of-manoeuvre position, when said first and second obstacles, as displayed, are set in a longitudinal direction outside the parking area and comprised in the transverse dimension of the parking area, and

wherein said at least one first line comprises a first line (12) shaped like an L set upside down so as to define a limit to the outer corner portion of the first obstacle, and a second line (13) shaped like an L set upside down, which defines the internal distal corner of said ideal parking area, said second line shaped like an L set upside down together with the horizontal stretch of said first line defining said ideal parking area.

2.  The system according to Claim 1, **characterized in that** the inner longitudinal side (13') of said ideal area enables the driver to identify the correct transverse start-of-manoeuvre position so that, upon completion of the manoeuvre, the vehicle is set at a pre-set distance (Dm) from the internal longitudinal edge that delimits the parking space.

3.  The system according to Claim 1, **characterized in that** said at least one first line comprises a first, longitudinal, line and a second line orthogonal thereto, of dimensions such as to define said ideal parking area.

4.  The system according to Claim 3, **characterized in that** said at least one first line comprises a first longitudinal line (12') and a second longitudinal line (13'), which are set parallel and at a distance from one another by a given distance (Obs_x), and a third line (12") and a fourth line (13") orthogonal to said first and second lines, which extend, in mutually opposite directions, starting from respective distal ends of said first and second lines, so as to be parallel to and at a distance from one another by a given distance (Obs_y), said ideal parking area being identified at least by said third and fourth lines and by one of said first and second lines.

5.  The system according to Claim 1, **characterized in that** said at least one second line of assistance comprises a line (17) inclined by an angle such that the driver is able to detect that he has to pass from the first step to the second step of the manoeuvre, when said inclined line, as displayed, sets itself parallel to the internal longitudinal edge of the parking space.

6.  The system according to Claim 5, **characterized in that** said control means are configured for displaying said inclined line only when a value of steering angle approximately equal to said first known angle is detected.

7.  The system according to Claim 1, **characterized in that** it comprises at least one third line of assistance (16) defining the transverse area that the body of the vehicle comes to traverse in a reverse manoeuvre with the current steering angle.

8.  The system according to Claim 1, **characterized in that** said control means are configured for displaying said at least one first line of assistance both when they detect a condition of engagement of the reverse and when the vehicle is moving forwards.

**Patentansprüche**

1.  Parkunterstützungssystem für die Unterstützung des Fahrers bei einem Rückwärtsfahrmanöver, um das Fahrzeug an der Straßenseite parallel zur Richtung der Straße in einen Parkraum zwischen einem ersten Hindernis und einem zweiten Hindernis, die die vordere Grenze bzw. die hintere Grenze des Raums in Bezug auf die Karosserie des Fahrzeugs definieren, zu parken, wobei das System umfasst:

    Mittel (2), um die hintere Szene zu detektieren;
    eine Anzeige (4), um das Bild der detektierten Szene anzuzeigen;
    Steuermittel (3), die entworfen sind, um dem Bild wenigstens eine Unterstützungslinie für das Manöver zu überlagern, die mit dem Fahrzeug in Bezug auf das detektierte Bild beweglich und auf der Anzeige statisch ist, wobei das System **dadurch gekennzeichnet ist, dass** es wenigstens eine erste Unterstützungslinie (12, 13) umfasst, die in Übereinstimmung mit einem Schema festgelegt ist, das eine Referenz für den Fahrer über die korrekte longitudinale und transversale Position des Fahrzeugs in Bezug auf die oben genannte Hindernisse bereitstellt, um das oben erwähnte Rückwärtsfahr-Parkmanöver zu beginnen, so dass das Parkmanöver ohne Störung mit den oben genannten Hindernissen mit einem ersten Radeinschlagschritt mit einem ersten bekannten Einschlagwinkel und einem zweiten, unmittelbar folgenden Radeinschlagschritt mit einem zweiten bekannten Einschlagwinkel mit entgegen gesetztem Vorzeichen in Bezug auf den ersten Einschlagwinkel ausgeführt wird, wobei das System wenigstens eine zweite Unterstützungslinie (17) umfasst, die für den Fahrer eine Referenz bezüglich der Position des Fahrzeugs bereitstellt, bei der es notwendig ist, von dem ersten Schritt zu dem zweiten Schritt überzugehen, um das Parkmanöver abzuschließen, wenn das Fahrzeug im Wesentlichen ausgerichtet auf das erste und das zweite Hindernis angeordnet ist, wobei

die wenigstens eine erste Unterstützungslinie (12, 13) in einer im Voraus festgelegten Position des angezeigten Bildes einen idealen Parkbereich (20) mit vorgegebenen longitudinalen und transversalen Abmessungen identifiziert, so dass die Karosserie des Fahrzeugs während des oben genannten Manövers den idealen Parkbereich nur an seiner äußeren longitudinalen Seite schneidet, so dass der Fahrer detektieren kann, dass er die korrekte longitudinale und transversale Manöverstartposition erreicht hat, wenn das erste und das zweite Hindernis wie angezeigt in einer longitudinalen Richtung außerhalb des Parkbereichs angeordnet sind und in der transversalen Abmessung des Parkbereichs enthalten sind, und

wobei die wenigstens eine erste Linie eine erste Linie (12), die die Form eines umgedrehten L hat, um eine Grenze zu dem äußeren Eckabschnitt des ersten Hindernisses zu definieren, und eine zweite Linie (13), die die Form eines umgedrehten L hat, die die innere distale Ecke des distalen Parkbereichs definiert, umfasst, wobei die zweite Linie, die die Form eines umgedrehten L hat, zusammen mit der horizontalen Strecke der ersten Linie den idealen Parkbereich definiert.

2. System nach Anspruch 1, **dadurch gekennzeichnet, dass** die innere longitudinale Seite (13') des idealen Bereichs dem Fahrer ermöglicht, die korrekte transversale Manöverstartposition zu identifizieren, so dass bei Abschluss des Manövers das Fahrzeug in einem im Voraus festgelegten Abstand (Dm) von der inneren longitudinalen Kante, die den Parkraum begrenzt, angeordnet ist.

3. System nach Anspruch 1, **dadurch gekennzeichnet, dass** die wenigstens eine erste Linie eine erste longitudinale Linie und eine zweite Linie senkrecht hierzu umfasst, die Abmessungen besitzen, um den idealen Parkbereich zu definieren.

4. System nach Anspruch 3, **dadurch gekennzeichnet, dass** die wenigstens eine erste Linie eine erste longitudinale Linie (12') und eine zweite longitudinale Linie (13') umfasst, die parallel und in einem gegenseitigen Abstand, der durch eine Strecke (Obs_x) gegeben ist, angeordnet sind, und eine dritte Linie (12") sowie eine vierte Linie (13"), die zu der ersten und der zweiten Linie senkrecht sind, die sich in zueinander entgegengesetzten Richtungen erstrecken und bei einem jeweiligen distalen Ende der ersten bzw. der zweiten Linie beginnen, um parallel und voneinander um eine gegebene Strecke (Obs_y) beabstandet zu sein, umfasst, wobei der ideale Parkbereich zumindest durch die dritte und die vierte Linie und durch eine der ersten und der zweiten Linien identifiziert wird.

5. System nach Anspruch 1, **dadurch gekennzeichnet, dass** die wenigstens eine zweite Unterstützungslinie eine Linie (17) umfasst, die um einen Winkel geneigt ist, so dass der Fahrer detektieren kann, dass er von dem ersten Schritt zu dem zweiten Schritt des Manövers übergehen muss, wenn die geneigte Linie wie angezeigt selbst parallel zu der inneren longitudinalen Kante des Parkraums angeordnet ist.

6. System nach Anspruch 5, **dadurch gekennzeichnet, dass** die Steuermittel konfiguriert sind, um die geneigte Linie nur dann anzuzeigen, wenn ein Wert des Einschlagwinkels, der ungefähr gleich dem ersten bekannten Winkel ist, detektiert wird.

7. System nach Anspruch 1, **dadurch gekennzeichnet, dass** es wenigstens eine dritte Unterstützungslinie (16) umfasst, die den transversalen Bereich definiert, den die Karosserie des Fahrzeugs in einem Rückwärtsfahrmanöver mit dem momentanen Einschlagwinkel durchquert.

8. System nach Anspruch 1, **dadurch gekennzeichnet, dass** die Steuermittel konfiguriert sind, um die wenigstens eine erste Unterstützungslinie sowohl dann anzuzeigen, wenn sie einen Zustand mit eingelegtem Rückwärtsgang detektieren, als auch dann anzeigen, wenn sich das Fahrzeug vorwärts bewegt.

**Revendications**

1. Système d'assistance au stationnement pour l'assistance du conducteur dans une manoeuvre en marche arrière pour garer le véhicule sur le bord de route parallèle à la direction de la route dans un espace de stationnement entre un premier obstacle et un deuxième obstacle, qui définissent, respectivement, la limite avant et la limite arrière dudit espace par rapport au corps du véhicule, ledit système comprenant:

des moyens (2) pour la détection de la scène arrière;

un affichage (4) pour l'affichage de l'image de la scène détectée;

des moyens de commande (3) conçus pour superposer sur ladite image au moins une ligne d'assistance pour la manoeuvre, qui est mobile avec le véhicule en ce qui concerne l'image détectée et statique sur l'affichage, ledit système étant **caractérisé en ce qu'**il comprend au moins une première ligne d'assistance (12, 13) disposée selon un schéma qui procure une référence pour le conducteur sur la position longitudinale et transversale correcte du véhicule, par rapport aux obstacles susdits, pour débuter la manoeuvre de stationnement en marche arrière susdite, de telle manière que ladite manoeuvre de stationnement soit réalisée, sans interférer avec les obstacles susdits, avec une première étape d'orientation sous un premier angle d'orientation connu et avec une deuxième étape d'orientation, immédiatement subséquente, avec un deuxième angle d'orientation connu, de signe opposé par rapport au premier, ledit système comprenant au moins une deuxième ligne d'assistance (17) qui procure au conducteur une référence sur la position du véhicule dans laquelle il est nécessaire de passer de la première étape à la deuxième étape pour terminer la manoeuvre de stationnement avec le véhicule disposé de manière substantiellement alignée vis-à-vis desdits premier et deuxième obstacles, tandis que

ladite au moins une première ligne d'assistance (12, 13) identifie, dans une position pré-établie de l'image affichée, une aire de stationnement idéale (20) de dimensions longitudinale et transversale prédéterminées, de telle manière que le corps du véhicule pendant la manoeuvre susdite coupe ladite aire de stationnement idéale seulement sur son côté longitudinal extérieur de telle manière que le conducteur est capable de détecter qu'il a atteint ladite position de début de manoeuvre longitudinale et transversale correcte, lorsque lesdits premier et deuxième obstacles, tels qu'affichés sont placés dans une direction longitudinale à l'extérieur de la zone de stationnement et compris dans la dimension transversale de l'aire de stationnement, et

tandis que ladite au moins une première ligne comprend une première ligne (12) ayant une forme semblable à un L disposée tête en bas de manière à définir une limite à la portion d'angle extérieur du premier obstacle, et une deuxième ligne (13) ayant une forme semblable à un L disposé tête en bas, qui défini l'angle distal interne de ladite aire de stationnement idéale, ladite deuxième ligne ayant sensiblement la forme d'un L disposé tête en bas conjointement avec l'étendue horizontale de ladite première ligne définissant ladite aire de stationnement idéale.

2.  Système selon la revendication 1, **caractérisé en ce que** le côté longitudinal interne (13') de ladite aire idéale permet au conducteur d'identifier la position de début de manoeuvre transversale correcte de telle manière que, lors de la terminaison de la manoeuvre, le véhicule est placé à une distance pré-établie (Dm) à partir de l'angle longitudinal interne qui délimite l'espace de stationnement.

3.  Système selon la revendication 1, **caractérisé en ce que** ladite au moins une première ligne comprend une première ligne longitudinale et une deuxième ligne orthogonale à celle-ci, de dimensions telles qu'elles définissent ladite aire de stationnement idéale.

4.  Système selon la revendication 3, **caractérisé en ce que** ladite au moins une première ligne comprend une première ligne longitudinale (12') et une deuxième ligne longitudinale (13'), qui sont disposées parallèlement et à une distance l'une de l'autre correspondant à une distance donnée (Obs_x), et une troisième ligne (12") et une quatrième ligne (13") orthogonales auxdites première et deuxième lignes, qui s'étendent, dans des directions mutuellement opposées, en partant des extrémités distales respectives desdites première et deuxième lignes, de manière à être parallèles à et à une distance l'une de l'autre correspondant à une distance donnée (Obs_y), ladite aire de stationnement idéale étant identifié au moins par lesdites troisième et quatrième lignes et par l'une desdites première et deuxième lignes.

5.  Système selon la revendication 1, **caractérisé en ce que** ladite au moins une deuxième ligne d'assistance comprend une ligne (17) inclinée d'un angle tel que le conducteur est capable de détecter qu'il est passé de la première à la deuxième étape de la manoeuvre, lorsque ladite ligne inclinée, telle qu'affichée, se fixe elle-même parallèlement au bord longitudinal interne de l'espace de stationnement.

6.  Système selon la revendication 5, **caractérisé en ce que** lesdits moyens de commande sont configurés pour afficher ladite ligne inclinée seulement lorsqu'une valeur de l'angle d'orientation approximativement égale audit premier angle connu est détectée.

7.  Système selon la revendication 1, **caractérisé en ce qu'**il comprend au moins une troisième ligne d'assistance (16) définissant l'aire transversale que le corps du véhicule vient à traverser dans une manoeuvre en marche arrière avec l'angle d'orientation actuel.

8. Système selon la revendication 1, **caractérisé en ce que** lesdits moyens de commande sont configurés pour afficher ladite au moins une première ligne d'assistance aussi bien quand ils détectent un état d'engagement de la marche arrière que quand le véhicule se déplace en marche avant.

# FIG. 1

# FIG. 2

# FIG. 3

## FIG. 4

## FIG. 5A

# FIG. 5B

# FIG. 6

# FIG. 7

# FIG. 8

# FIG. 9

## FIG. 10

## FIG. 11

# FIG. 12

# FIG. 13

FIG. 14

FIG. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008094252 A1
- EP 1493632 A1

- EP 1839948 A